# EUROPÄISCHE PATENTSCHRIFT

(11) **EP 2 438 464 B1**
(45) Veröffentlichungstag und Bekanntmachung des Hinweises auf die Patenterteilung: **23.04.2014**
(21) Anmeldenummer: 10722325.7
(22) Anmeldetag: 07.06.2010
(51) Int. Cl.: G01S 15/93, G01S 15/87, B62D 15/02, G01S 13/93

(54) **VORRICHTUNG UND VERFAHREN ZUR ANZEIGE VON OBJEKTEN IN EINER FAHRZEUGUMGEBUNG**
DEVICE AND METHOD FOR DISPLAYING OBJECTS IN THE SURROUNDINGS OF A VEHICLE
DISPOSITIF ET PROCÉDÉ POUR L'AFFICHAGE DES OBJETS DANS L'ENVIRONNEMENT D'UN VÉHICULE

(30) Priorität: 05.06.2009 DE 102009024062
(43) Veröffentlichungstag der Anmeldung: 11.04.2012
(73) Patentinhaber: Valeo Schalter und Sensoren GmbH, 74321 Bietigheim-Bissingen (DE)
(72) Erfinder: JECKER, Nicolas, 73730 Esslingen (DE); GRIMM, Olivier, 74223 Flein (DE); VOVKUSHEVSKY, Vsevolod, 74321 Bietigheim-Bissingen (DE); GEIGER, Tobias, 74321 Bietigheim-Bissingen (DE)
(86) Internationale Anmeldenummer: PCT/EP2010/003408
(87) Internationale Veröffentlichungsnummer: WO 2010/139487

(56) Entgegenhaltungen:
- WO-A1-2008/055567
- DE-A1- 4 333 112
- DE-A1-102008 001 648
- DE-B3-102007 032 698

## Beschreibung

Die Erfindung betrifft eine Vorrichtung und Verfahren zur Anzeige von Objekten in einer Fahrzeugumgebung der im Oberbegriff des Anspruchs 1 bzw. 11 genannten Art.

Aus der EP 1 447 271 A2 sind bereits eine derartige Vorrichtung und ein zugehöriges Verfahren bekannt. Die bekannte Vorrichtung umfasst eine Anzeigevorrichtung, um dem Fahrer nach einem Einparkvorgang die Lage des Fahrzeugs in Bezug auf deren seitliche Begrenzungen anzuzeigen. Zur Bestimmung der Positionen der seitlichen Begrenzungen ist eine Sensoranordnung mit zwei seitlichen Abstandssensoren auf jeder Fahrzeugseite vorgesehen, die jeweils Objekte in einer linken und rechten Fahrzeugumgebung erfassen und deren Abstand zum Fahrzeug bestimmen. Die seitlichen Abstandssensoren sind dabei jeweils als Ultraschallsensoren mit schmalem Detetektionsbereich ausgebildet, wie sie üblicherweise zur Vermessung von Parklücken verwendet werden. Die Abstandssensoren erfüllen dabei eine Doppelfunktion und können sowohl zur Vermessung der Parklückenlänge bei einer Vorbeifahrt des Fahrzeugs vor dem Einparkvorgang als auch zur Erfassung der Parklückenbegrenzungen während des Einparkvorgangs verwendet werden.

Da die seitlichen Abstandssensoren mit ihrem schmalen Detektionsbereich nur einen Teilbereich der seitlichen Fahrzeugumgebung erfassen können, ist eine Auswerteeinrichtung vorgesehen, welche die Position von bereits erfassten Objekten bzw. Objektbereichen in Bezug auf des Fahrzeug speichert und bei der Fahrbewegung des Fahrzeugs fortlaufend anhand des zurückgelegten Fahrwegs aktualisiert. Im Zuge der Fahrbewegung des Fahrzeugs überstreichen die seitlichen Sensoren somit mit ihren Detektionsbereichen die jeweilige seitliche Fahrzeugumgebung, so dass die seitliche Fahrzeugumgebung nach dem Einparkvorgang vollständig abgetastet wurde und auf der Anzeigvorrichtung angezeigt werden kann. Die Anzeigevorrichtung zeigt dann eine virtuelle Draufsicht auf das Fahrzeug und die seitliche Fahrzeugumgebung mit den seitlichen Begrenzungen des Parkplatzes an.

Diese Anzeige kann den Fahrer unmittelbar nach dem Einparkvorgang bei der Entscheidung unterstützen, welche Fahrzeugtür sich wieweit öffnen lässt und ob eine Korrektur der Parkposition des Fahrzeugs erförderlich ist. Zur Unterstützung des Fahrers beim Einvorgang selbst oder bei einem Ausparkvorgang zu einem späteren Zeitpunkt ist die bekannte Anzeige allerdings nur bedingt geeignet, da sich die Fahrzeugumgebung seit dem Einparkvorgang verändert haben kann.

Des Weiteren offenbart das Dokument WO 2009/135538 A1 (Stand der Technik nach Artikel 54(3), EPÜ) eine Vorrichtung zur Anzeige von Objekten in einer Fahrzeugumgebung. Die Vorrichtung umfasst dabei eine Sensoranordnung mit seitlichen Sensoren, um bei einer Vorbeifährt des Fahrzeugs an einer Parklücke die Position von Objekten in der Fahrzeugumgebung zu messen. Bei der Vorbeifahrt wird ferner der vom Fahrzeug zurückgelegte Fahrweg mittels einer Fahrwegerfassungseinrichtuhg erfasst, um dann anschließend mittels einer Verarbeitungseinrichtung anhand des zurückgelegten Fahrwegs die Position der Objekt auch dann noch zu bestimmen, wenn diese den Detektionsbereich der Sensoran-ordnung bereits verlassen haben. Die Positionen der Objekte relativ zum Fahrzeug werden dem Fahrer dann auf einer Anzeigevorrichtung angezeigt.

Die DE43 33 112 A1 betrifft ein Verfahren und eine Vorrichtung zum Ausparken eines Fahrzeugs aus eine Parklücke, bei dem mittels einer Sensoranordnung der Lenkwinkel und der Abstand zu Hindernissen in der Fahrzeugumgebung fortlaufend erfasst werden. Aus diesen Daten werden mittels einer Auswerteeirichtung eine lokale Hinderniskarte erzeugt, eine Fahrstrategie zum Ausparken ermittelt und dem Fahrer engtsprechende Fahrhineise übermittelt.

Aufgabe der Erfindung ist es, eine Vorrichtung und Verfahren zur Anzeige von Objekten in einer Fahrzeugumgebung der im Oberbegriff des Anspruchs 1 bzw. 11 genannten Art dahingehend weiter zu entwickeln, dass die Unterstützung des Fahrers bei Ein- und Ausparkvorgängen verbessert wird.

Diese Aufgabe wird erfindungsgemäß durch die Merkmale des Anspruchs 1. Weitere die Erfindung in vorteilhafter Weise ausgestaltende Merkmale enthalten die Unteransprüche.

Der mit der Erfindung erzielte Vorteil besteht darin, dass auf der Anzeigevorrichtung bereits dann Informationen über die Fahrzeugumgebung anzeigt werden, wenn diese noch nicht vollständig von der Sensoranordnung erfasst wurde. Dabei wird fortlaufend der Bereich der Fahrzeugumgebung ermittelt, für den noch keine Objektinformationen vorliegen, da er noch nicht vom Detektionsbereich der Sensoranordnung überstrichen wurde. Die Abmessungen dieses Bereichs werden dann zusätzlich auf der Anzeigevorrichtung angezeigt, um dem Fahrer trotz der noch unvollständigen Informationen eine realistische Einschätzung der Fahrzeugumgebung zu ermöglichen.

Zur besonders einfachen und zuverlässigen Erfassung von Objekten in der Fahrzeugumgebung umfasst die Sensoranordnung vorzugsweise wenigstens einen Ultraschallsensor.

Die Sensoranordnung kann besonders einfach und kostengünstig einen ohnehin vorhandenen Sensor einer Parklückenvermessungseinrichtung umfassen, der an einer Seitenwand des Fahrzeugs angeordnet und zur Vermessung von Parklücken vorgesehen ist. Des Weiteren kann die Sensoranordnung wenigstens einen Abstandsensor umfasst, der an einem Front- oder Heckbereich des Fahrzeugs angeordnet und Bestandteil eine ohnehin vorhandenen Einparkhilfe ist.

Um dem Fahrer einen schnellen und anschaulichen Überblick zu geben, kann die Anzeigevorrichtung dazu ausgebildet sein, die Fahrzeugumgebung in einer Draufsicht darzustellen. Dabei kann auf der Anzeigvorrichtung neben der Fahrzeugumgebung noch eine virtuelle oder schematische Draufsicht des Fahrzeugs dargestellt werden.

Die Fahrzeugumgebung wird auf der Anzeigevorrichtung in Form mehrerer Segmente dargestellt, wobei die Segmente markiert dargestellt sein können. Die Markierung kann dann davon abhängen, ob in dem betreffenden Segment wenigstens ein Objekt ermittelt wurde oder nicht oder ob das Segment bereits vom Detektionsbereich der Sensoranordnung überstrichen wurde oder nicht.

Um die Unterstützung für den Fahrer noch weiter zu verbessern, wird auf der Anzeigevorrichtung vorzugsweise eine das Fahrzeug vollständig umschließende Fahrzeugumgebung angezeigt.

Nachfolgend wird ein Ausführungsbeispiel der Erfindung anhand einer zeichnerischen Darstellung näher erläutert.

In der Darstellung zeigen:
- Fig. 1 und 2: einen Ausparkvorgang eines Fahrzeugs in schematischer Draufsicht und
- Fig. 3 und 4: eine Anzeigevorrichtung zur Anzeige von Objekten in der Fahrzeugumgebung.

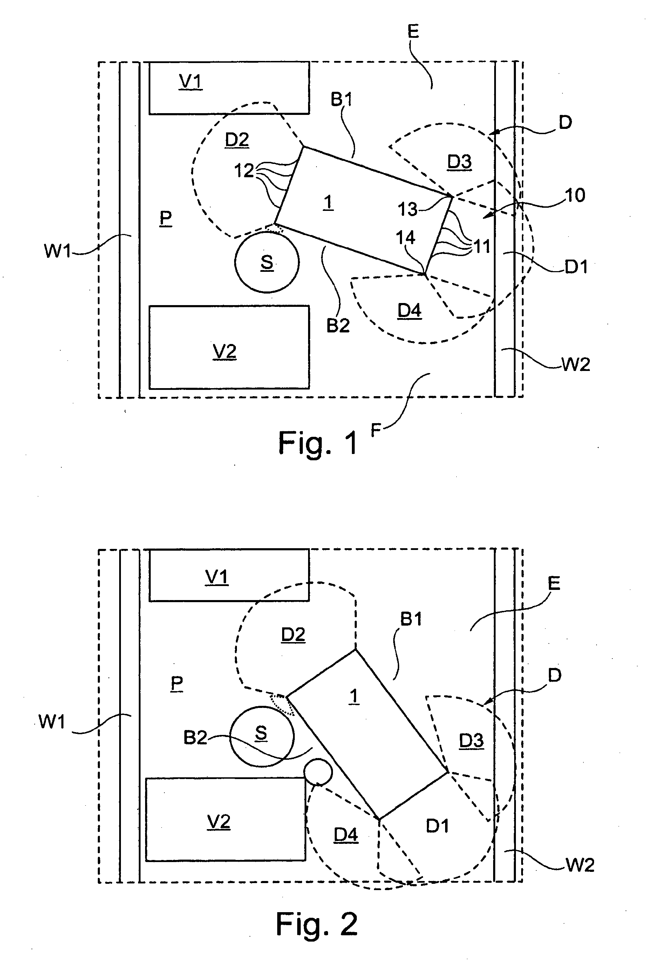

In Fig. 1 und 2 ist ein Ausparkvorgang eines Fahrzeugs 1 aus einer Querparklücke P gezeigt, die auf beiden Seiten jeweils durch ein parkendes Fahrzeug V1 bzw. V2 begrenzt ist. Das Fahrzeug 1 weist eine Vorrichtung zur Anzeige von Objekten in der Fahrzeugumgebung mit einer Sensoranordnung 10 auf, die eine Mehrzahl von Abstandssensoren 11 am Frontstoßfänger mit zugehörigem Detektionsbereich D1, eine Mehrzahl von Abstandessensoren 12 am Heckstoßfänger mit Detektionsbereich D2 sowie einen linken 13 und rechten seitlichen Sensor 14 mit Detektionsbereich D3 bzw. D4 umfasst.

Die Sensoren 11 - 14 sind dabei jeweils als an sich bekannte Ultraschallabstandsensoren ausgebildet und Bestandteil einer Einparkhilfe des Fahrzeugs 1, wobei die vorderen 11 und hinteren Abstandssensoren 12 dazu bestimmt sind, den Abstand des Fahrzeugs 1 zu vorderen bzw. hinteren Hindernissen zu bestimmen und dem Fahrer diesen in Verbindung mit der Einparkhilfe als optisches und/oder akustisches Signal auszugeben. Die Detektionsbereiche D1 und D2 der vorderen 11 bzw. hinteren Sensoren 12 weist von oben gesehen jeweils etwa die Form eines Kreissegmentes auf und ergibt sich als Summe der einander überschneidenden, von oben gesehen jeweils kreisegmentförmigen Detektionsbereiche der einzelnen Sensoren 11 bzw. 12. Die Detektionsbereiche D1 und D2 decken die Fahrzeugfront bzw. das Fahrzeugheck jeweils über seine gesamte Breite ab und weisen vom Fahrzeug 1 aus eine maximale Erstreckung von etwa 4 - 6 Metern auf. Mit maximaler Erstreckung des jeweiligen Detektionsbereich D1 - D4 ist dabei der Abstand vom Fahrzeug gemeint, in dem ein Objekt gerade noch vom zugehörigen Sensor erfasst werden kann.

Die seitlichen Sensoren 13 und 14 sind jeweils an der linken bzw. rechten Seitenwand des Fahrzeugs 1 in einem zugheörigen Eckbereich des Frontstoßfängers angeordnet und zur Vermessung von Parklücken bei einer Vorbeifahrt des Fahrzeugs 1 vorgesehen. Die Sensoren 13 und 14 weisen einen von oben gesehen kreissegmentförmigen Detektionsbereich D3 bzw. D4 mit einer maximalen Ausdehnung von etwa 4 - 6 Metern auf, der sich ausgehend von der Seitenwand in Fahrzeugquerrichtung erstreckt. Die Detektionsbereiche D3 und D4 decken die zugehörige Seitenwand des Fahrzeugs 1 nur über Teil ihrer Längserstreckung ab. Bei dem Ausführungsbeispiel gemäß der Fig. 1 und 2 decken die Detektionsbereiche D3 und D4 der Seite aus gesehen jeweils etwa ein vorderes Drittel der zugehörigen Seitenwand ab. Es könnten aber auch seitliche Sensoren 13 und 14 mit wesentlich schmalerem Erfassungsbereich vorgesehen sein, die nur einen deutlich geringeren Teil der Seitenwand abdecken.

Die Sensoranordnung 10 bestehend aus den Sensoren 11 - 14 weist insgesamt einen Detektionsbereich D auf, welcher durch die Summe der Detektionsbereiche D1 - D4 gebildet ist, wobei der Detektionsbereich 10 das Fahrzeug 1 nicht vollständig sondern nur teilweise umschließt. Somit ist die Sensoranordnung 10 nicht dazu in der Lage, Objekte in der gesamtem Umgebung rund um das Fahrzeug 1 durch direkte Messung zu erfassen. Es verbleibt vielmehr in dem linken und rechten Seitenbereich neben dem Fahrzeug 1 jeweils ein an das Fahrzeug 1 angrenzender Blindbereich B1 bzw. B2, der außerhalb des Detektionsbereichs D liegt und in dem somit Objekte nicht direkt durch die Sensoranordnung 10 erfasst werden können.

Um auch für die Blindbereiche B1 und B2 Objektinformation zu erlangen, umfasst die Vorrichtung zur Anzeige von Objekten ferner Speichermittel, um die Position von durch die Sensoranordnung 10 bereits erfassten Objekten zu speichern, eine Fahrwegerfassungseinrichtung, um den zurückgelegten Fahrweg des Fahrzeugs 1 zu erfassen, sowie eine Verarbeitungseinrichtung, um anhand des erfassten Fahrwegs und der gespeicherten Objektposition die Position des Objektes relativ zum Fahrzeug 1 fortlaufend neu zu bestimmen. Somit kann die Position eines einmal von der Sensoranordnung 10 erfassten stationären Objektes auch dann noch relativ zum Fahrzeug 1 angezeigt werden, wenn das Objekt aufgrund einer Fahrbewegung des Fahrzeugs 1 den Detektionsbereich D bereits wieder verlassen hat.

Die Fahrwegerfassungseinrichtung umfasst wenigstens einen Radsensor, um den zurückgelegten Weg eine Fahrzeugrades zu messen, sowie einen Lenkwinkelsensor, um den eingestellten Lenkwinkel zu messen und daraus den in Querrichtung zurückgelegten Fahrweg zu ermitteln. Dabei ist die Fahrwegerfassungseinrichtung ebenfalls Bestandteil der Parkhilfe des Fahrzeugs 1 und dazu bestimmt, bei der Parklückenvermessung den bei der Vorbeifahrt an der Parklücke zurückgelegten Fahrweg zu ermitteln. Die Verarbeitungseinrichtung ist vorzugsweise integral mit einem Steuergerät der Parkhilfe ausgebildet.

Bei dem in Fig. 1 und Fig. 2 gezeigtem Ausparkvorgang wird das Fahrzeug 1 in Vorwärtsrichtung aus der Parklücke P herausgefahren. Die Parklücke P ist dabei in einem Parkhaus angeordnet und grenzt seitlich an eine Säule S an. Der hintere Rand der Parklücke P ist durch eine Wand W1 begrenzt, während der vordere Rand der Parklücke P an eine Fahrbahn F angegrenzt, welche durch eine zweite Wand W2 begrenzt ist. In der nicht gezeigten Parkstellung des Fahrzeugs 1 in der Parklücke P befinden sich zunächst die Wand W1 im Detektionsbereich D2 der hinteren Sensoren 12, das geparkte Fahrzeug V1 im Detektionsbereich D3 des linken Sensors 13 und die Säule S im Detektionsbereich D4 des rechten Sensors 14 und werden somit von diesen Sensoren 12, 13 bzw. 14 durch direkte Abstandsmessung als Objekte in der Fahrzeugumgebung erfasst.

Beim nachfolgenden Ausparkvorgang des Fahrzeugs 1 bewegen sich dann die Detektionsbereiche D1 - D4 mit dem Fahrzeug 1 nach vorn, bis schließlich eine Zwischenstellung gemäß Fig. 1 erreicht ist, in welcher die Objekte W1, V1 und S außerhalb der Detektionsbereiche D1 - D4 liegen und daher von der Sensoranordnung 10 nicht mehr durch direkte Messung erfasst werden können. Die jeweiligen Positionen der Objekte W1, V1 und S relativ zum Fahrzeug 1 werden dann fortlaufend durch die Auswerteeinrichtung anhand der gespeicherten Position bei der Erfassung und des seit der Erfassung vom Fahrzeug 1 zurückgelegten Fahrwegs bestimmt. Die Positionen der Objekte werden dabei solange von der Auswerteeinrichtung verfolgt, bis ein vorgebener Abstand und/oder eine vorgegebene Zeitspanne seit der Erfassung erreicht sind. Im weiteren Verlauf des Ausparkvorgangs fährt das Fahrzeug weiter nach vorn rechts bis die in Fig. 2 gezeigte Position erreicht ist, in welcher auch das zweite geparkte Fahrzeug V2 mit seiner Frontseite in den Detektionsbereich D4 des rechten Sensors 14 gerät und somit von diesem in direkter Messung erfasst werden kann.

Die Auswerteeinrichtung ist ferner dazu ausgebildet, den Bereich E in der Fahrzeugumgebung zu bestimmen, welcher bereits vom Detektionsbereich D der Sensoranordnung 10 überstrichen wurde. Hierzu sind in der Auswerteeinrichtung Informationen über die geometrische Erstreckung des Detektionsbereichs 10 hinterlegt. Dabei kann ein stets gleicher, vorgespeicherter Detektionsbereich D vorgesehen sein. Alternativ könnte der Detektionsbereich D aber auch anhand der Umgebungsbedingungen oder des Funktionsstatus der Sensoranordnung 10 angepasst werden, z. B. durch entsprechende Reduzierung des angenommenen Detektionsbereichs D wenn Sensoren aufgrund einer Funktionsstörung nicht oder nur eingeschränkt zur Verfügung stehen. Anhand des Detektionsbereichs D und des erfassten Fahrwegs bestimmt die Auswerteeinrichtung dann, welcher Bereich E der Fahrzeugumgebung bereits vom Detektionsbereich D der Sensoranordnung 10 überstrichen worden ist. Für diesen Bereich stehen dann Informationen über die Position von stationären Objekten zur Verfügung, während über den verbleibenden Bereich der Fahrzeugumgebung noch keine Informationen vorliegen.

Die Erstreckung des Bereichs E kann dabei von der Auswerteeinrichtung entweder so festgelegt werden, dass stets die maximal mögliche Detektionsbereich D der Sensoranordnung 10 zugrunde gelegt, d. h. derjenige Detektionsbereich D der bei freier Sicht der Sensoranordnung 10 möglich wäre, unabhängig von einer Begrenzung des Detektionsbereichs D durch ein Objekt. Alternativ wird die Erstreckung des Bereichs E, wie in Fig. 1 und 2 eingezeichnet, anhand der tatsächlich möglichen Erfassung bestimmt, d. h. bei in den Detektionsbereich D hineinragenden Objekten, wird die jeweilige Objektkante als Grenze des Detektionsbereichs D zugrunde gelegt. Der Bereich E wird in diesem Abschnitt dann durch die entsprechende Objektkante begrenzt. Vorzugsweise wird zusätzlich zum Verlauf des zurückgelegten Fahrwegs auch der zeitliche Verlauf erfasst, in welchem dieser zurückgelegt wurde. Bei der Ermittlung des Bereichs E können werden dann nur diejenigen Bereiche der Fahrzeugumgebung herangezogen, die vom Detektionsbereich D der Sensoranordnung innerhalb einer vorgegebenen Zeitspanne überstrichen worden sind.

Die Objekte in der Fahrzeugumgebung sowie die Erstreckung des Bereichs E für den Objektinformationen vorliegen werden dem Fahrer des Fahrzeugs 1 auf einer Anzeigevorrichtung 20 angezeigt, die im Innenraum des Fahrzeugs 1, z. B. an einem Armaturenbrett angeordnet ist. Darüber hinaus kann es noch vorgesehen sein, den Fahrer noch zusätzlich optisch oder akustisch zu Warnen, wenn ein vorgegebener vorderer, hinterer oder seitlicher Mindestabstand zu einem der Objekte unterschritten wird oder wenn das Fahrzeug 1 den Bereich E verlässt, für den Objektinformationen vorliegen.

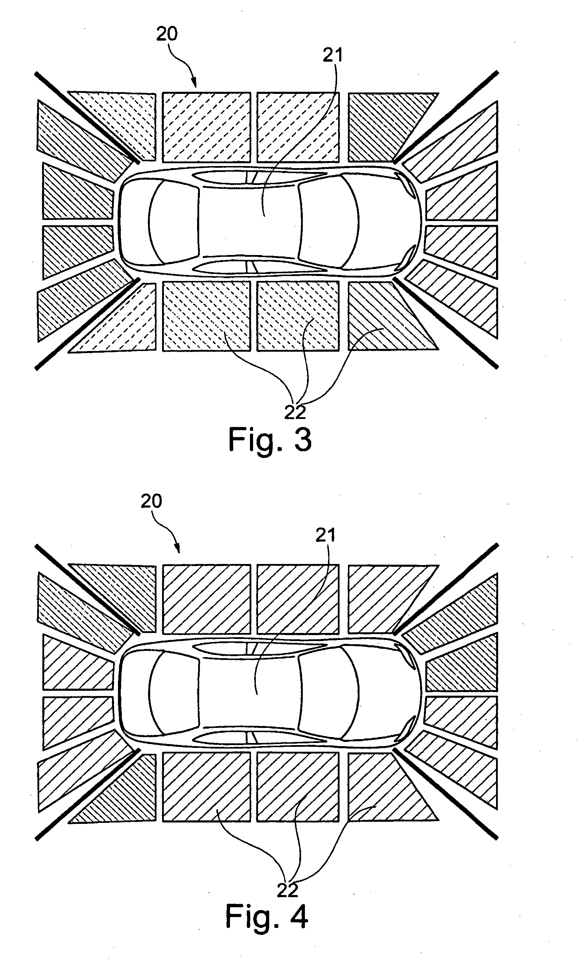

Eine entsprechende Anzeigevorrichtung 20 ist in den Fig. 3 und 4 gezeigt. Die Anzeigevorrichtung umfasst einen Bildschirm auf dem die äußeren Umrisse des Fahrzeugs 1 als schematische Draufsicht 21 sowie die Fahrzeugumgebung umlaufend um das Fahrzeug 1 herum dargestellt sind. Die Fahrzeugumgebung ist dabei in einzelne Segmente 22 aufgeteilt, die jeweils eine viereckige Form aufweisen und ein entsprechendes Segment der Fahrzeugumgebung repräsentieren. Dabei sind für den Front-, Heck- und die beiden seitlichen Bereiche der Fahrzeugumgebung jeweils vier Segmente 22 vorgesehen, wobei die Segmente 22 in Abhängigkeit von den durch die Auswerteeinrichtung ermittelten Objektinformationen gekennzeichnet sind. Dabei wird unterschieden zwischen Segmenten 22, bei denen im korrespondierenden Segment der Fahrzeugumgebung wenigstens ein Objekt erkannt wurde, Segmenten, bei denen im korrespondierenden Segment der Fahrzeugumgebung kein Objekt erkannt wurde, und Segmenten 22, die außerhalb des erfassten Bereichs E liegen, d. h. Segmente 22 für die noch keine Objektinformationen vorliegen. Die Kennzeichnung der Segmente 22 kann insbesondere durch eine flächige Einfärbung vorgenommen werden, wobei z. B. Segmente 22 mit wenigstens einem Objekt in gelber oder roter, objektfreie Segmente 22 in grüner und Segmente 22 für die noch keine Objektinformationen vorliegen in grauer Farbe eingefärbt werden.

Die Fig. 3 zeigt die Anzeigevorrichtung 20 bei Beginn des Ausparkvorgangs des Fahrzeugs 1 aus der Parklücke P gemäß Fig. 1 und 2, wobei das Fahrzeug 1 mit seinem Heckbereich noch unmittelbar vor der Wand W1 angeordnet. Dementsprechend sind die vier Segmente 22 im Heckbereich des Fahrzeugs 1 in gelber Farbe eingefärbt, um dem Fahrer anzuzeigen, dass hier ein Objekt vorhanden ist. Des Weiteren ist auch das vorderste Segment 22 auf linken und rechten Fahrzeugseite jeweils in gelber Farbe markiert, da hier jeweils ein Objekt V1 bzw. S vom Sensor 13 bzw. 14 erfasst wurde. Die übrigen Segmente 22 auf der linken und rechten Fahrzeugseite sind dagegen grau markiert, da für diese Bereiche der Fahrzeugumgebung noch keine Objektinformationen vorliegen.

Die Fig. 4 zeigt die Anzeigevorrichtung 20 in der Zwischenstellung des Fahrzeugs 1 gemäß Fig. 1. In dieser Position ist der gesamte Seitenbereich des Fahrzeugs 1 bereits von den seitlichen Sensoren 13 und 14 erfasst worden, so dass keine grau gekennzeichneten Segmente 22 mehr angezeigt werden. Die Hindernisse V1, S und D1 in der Fahrzeugumgebung werden durch eine gelbe Kennzeichnung der entsprechenden Segmente angezeigt.

Alternativ zu der in Fig. 3 und dargestellten Anzeige wäre es auch möglich, die Fahrzeugumgebung nicht in Form einzelner Segmente sondern kontinuierlich durch Einblendung von Flächen mit veränderlichem Umfang oder von Linie darzustellen. Dabei könnten dann die Umrisse der erfassten Objekte sowie die Ausdehnung des Bereichs E angezeigt werden, für den Objektinformationen vorliegen. Selbstverständlich wäre es auch möglich statt des Bereichs E den verbleiben Bereich der Fahrzeugumgebung zu kennzeichnen, für den keine Objektinformationen vorliegen.

## Patentansprüche

1. Vorrichtung zur Anzeige von Objekten in einer Fahrzeugumgebung mit einer Sensoranordnung (10), um Objekte in der Fahrzeugumgebung zu erfassen und deren Position relativ zum Fahrzeug (1) zu bestimmen, wobei die Sensoranordnung (10) mit ihrem Detektionsbereich (10) nur einen Teilbereich der Fahrzeugumgebung abdeckt, mit einer Fahrwegerfassungseinrichtung, um den zurückgelegten Fahrweg des Fahrzeugs (1) zu erfassen, und mit einer Verarbeitungseinrichtung, um anhand des zurückgelegten Fahrwegs des Fahrzeugs (1) die Positionen der Objekte in der Fahrzeugumgebung auch dann noch zu bestimmen, wenn diese den Detektionsbereich (D) der Sensoranordnung (10) verlassen haben, und mit einer Anzeigevorrichtung (20) um die Objekte und deren Positionen relativ zum Fahrzeug (1) anzuzeigen,
**dadurch gekennzeichnet,**
**dass** die Verarbeitungseinrichtung dazu ausgebildet ist, den Bereich (E) der Fahrzeugumgebung zu ermitteln, für den noch keine Objektinformationen vorliegen, da er nicht vom Detektionsbereich (D) der Sensoranordnung (10) überstrichen wurde, und wobei die Anzeigevorrichtung (20) dazu ausgebildet ist, die Erstreckung dieses Bereichs (E) anzuzeigen.

2. Vorrichtung nach Anspruch 1,
**dadurch gekennzeichnet,**
**dass** die Sensoranordnung (10) wenigstens einen Ultraschallsensor (11, 12, 13, 14) umfasst.

3. Vorrichtung nach einem der vorhergehenden Ansprüche,
**dadurch gekennzeichnet,**
**dass** die Sensoranordnung (10) wenigstens einen Sensor (13, 14) umfasst der an einer Seitenwand des Fahrzeugs (1) angeordnet und zur Vermessung von Parklücken vorgesehen ist.

4. Vorrichtung nach einem der vorhergehenden Ansprüche,
**dadurch gekennzeichnet,**
**dass** die Sensoranordnung (10) wenigstens einen Abstandsensor (11, 12) umfasst, der an einem Front- oder Heckbereich des Fahrzeugs (1) angeordnet ist.

5. Vorrichtung nach einem der vorhergehenden Ansprüche,
**dadurch gekennzeichnet,**
**dass** die Anzeigevorrichtung (20) dazu ausgebildet ist, die Fahrzeugumgebung in einer Draufsicht darzustellen.

6. Vorrichtung nach Anspruch 5,
**dadurch gekennzeichnet,**
**dass** die Anzeigevorrichtung (20) dazu ausgebildet ist, neben der Fahrzeugumgebung eine virtuelle oder schematische Draufsicht (21) des Fahrzeugs (1) darzustellen.

7. Vorrichtung nach einem der vorhergehenden Ansprüche,
**dadurch gekennzeichnet,**
**dass** die Anzeigevorrichtung (20) dazu ausgebildet ist, die Fahrzeugumgebung in Form mehrerer Segmente (22) darzustellen.

8. Vorrichtung nach Anspruch 7,
**dadurch gekennzeichnet,**
**dass** die Anzeigevorrichtung (20) dazu ausgebildet ist, die Segmente (22) markiert darzustellen, wobei die Markierung jeweils davon abhängt, ob in dem Segment (22) wenigstens ein Objekt ermittelt wurde oder nicht.

9. Vorrichtung nach einem der Ansprüche 7 oder 8,
**dadurch gekennzeichnet,**
**dass** die Anzeigevorrichtung (20) dazu ausgebildet ist, Segmente (22) markiert darzustellen, wobei die Markierung jeweils davon abhängt, ob das Segment (22) bereits vom Detektionsbereich (D) der Sensoranordnung (10) überstrichen worden ist oder nicht.

10. Vorrichtung nach einem der vorhergehenden Ansprüche,
**dadurch gekennzeichnet,**
**dass** die Fahrzeugumgebung das Fahrzeug (1) vollständig umschließt.

11. Verfahren zur Anzeige von Objekten in einer Fahrzeugumgebung mit den Schritten:
Erfassen von Objekten in der Fahrzeugumgebung und Bestimmung von deren Positionen relativ zum Fahrzeug (1) mit einer Sensoranordnung (10), die mit ihrem Detektionsbereich (D) nur einen Teilbereich der angezeigten Fahrzeugumgebung abdeckt,
Erfassung des zurückgelegten Fahrwegs des Fahrzeugs (1) über eine Fahrwegerfassungseinrichtung und Bestimmung der Positionen der erfassten Objekte anhand des zurückgelegten Fahrwegs, nachdem diese den Detektionsbereich (D) der Sensoranordnung (10) verlassen haben, und Anzeige der Objekte und deren Positionen relativ zum Fahrzeug (1) mittels einer Anzeigevorrichtung (20),
**dadurch gekennzeichnet,**
**dass** fortlaufend ein Bereich (E) der Fahrzeugumgebung ermittelt wird, für den noch keine Objektinformationen vorliegen, da er nicht vom Detektionsbereich (D) der Sensoranordnung (10) überstrichen wurde, und wobei auf der Anzeigevorrichtung (20) die Erstreckung diese Bereichs (E) angezeigt wird.

12. Verfahren nach Anspruch 11,
**dadurch gekennzeichnet,**
**dass** die Anzeigevorrichtung (20) die Fahrzeugumgebung in einer Draufsicht darstellt.

13. Verfahren nach einem der Ansprüche 11 oder 12,
**dadurch gekennzeichnet,**
**dass** die Anzeigevorrichtung (20) neben der Fahrzeugumgebung eine virtuelle oder schematische Draufsicht (21) des Fahrzeugs (1) darstellt.

14. Verfahren nach einem der Ansprüche 11 - 13,
**dadurch gekennzeichnet,**
**dass** die Anzeigevorrichtung (20) die Fahrzeugumgebung in Form mehrerer Segmente (22) darstellt.

15. Verfahren nach Anspruch 14,
**dadurch gekennzeichnet,**
**dass** die Anzeigevorrichtung (20) Segmente (22) markiert darstellt, wobei die Markierung jeweils davon abhängt, ob in dem Segment (22) wenigstens ein Objekt ermittelt wurde oder nicht.

16. Verfahren nach einem der Ansprüche 14 oder 15,
**dadurch gekennzeichnet,**
**dass** die Anzeigevorrichtung (20) Segmente (22) markiert darstellt, wobei die Markierung jeweils davon abhängt, ob das Segment (22) bereits vom Detektionsbereich (D) der Sensoranordnung (10) überstrichen worden ist oder nicht.

17. Verfahren nach einem der Ansprüche 11 - 16,
**dadurch gekennzeichnet,**
**dass** die Fahrzeugumgebung das Fahrzeug (1) vollständig umschließt.

## Claims

1. Device for displaying objects in the surroundings of a vehicle having a sensor arrangement (10), in order to sense objects in the surroundings of the vehicle and to determine their position relative to the vehicle (1), wherein the sensor arrangement (10) covers, with its detection range (D), only a partial area of the surroundings of the vehicle, having a route-sensing device for sensing the route travelled along by the vehicle (1), and having a processing device for determining, on the basis of the route travelled along by the vehicle (1), the positions of the objects in the surroundings of the vehicle even when said objects have left the detection range (D) of the sensor arrangement (10), and having a display device (20) for displaying the objects and their position relative to the vehicle (1)
**characterized**
**in that** the processing device is designed to determine the area (E) of the surroundings of the vehicle for which no object information is yet available, since said area (E) has not yet been passed over by the detection range (D) of the sensor arrangement (10), and wherein the display device (20) is designed to display the extent of this area (E).

2. Device according to Claim 1,
**characterized**
**in that** the sensor arrangement (10) comprises at least one ultrasound sensor (11, 12, 13, 14).

3. Device according to one of the preceding claims,
**characterized**
**in that** the sensor arrangement (10) comprises at least one sensor (13, 14) which is arranged on a side wall of the vehicle (1) and is provided for measuring parking spaces.

4. Device according to one of the preceding claims,
**characterized**
**in that** the sensor arrangement (10) comprises at least one distance sensor (11, 12) which is arranged on a front area or rear area of the vehicle (1).

5. Device according to one of the preceding claims,
**characterized**
**in that** the display device (20) is designed to represent the surroundings of the vehicle in a plan view.

6. Device according to Claim 5,
**characterized**
**in that** the display device (20) is designed to represent, in addition to the surroundings of the vehicle, a virtual or schematic plan view (21) of the vehicle (1).

7. Device according to one of the preceding claims,
**characterized**
**in that** the display device (20) is designed to represent the surroundings of the vehicle in the form of a plurality of segments (22).

8. Device according to Claim 7,
**characterized**
**in that** the display device (20) is designed to represent the segments (22) in a marked fashion, wherein the marking depends in each case on whether or not at least one object has been determined in the segment (22).

9. Device according to one of Claims 7 and 8,
**characterized**
**in that** the display device (20) is designed to represent segments (22) in a marked fashion, wherein the marking depends in each case on whether or not the segment (22) has already been passed over by the detection range (D) of the sensor arrangement (10).

10. Device according to one of the preceding claims,
**characterized**
**in that** the surroundings of the vehicle completely enclose the vehicle (1).

11. Method for displaying objects in the surroundings of a vehicle, having the steps:
sensing of objects in the surroundings of the vehicle and determination of the positions thereof relative to the vehicle (1) with a sensor arrangement (10) which covers, with its detection range (D), only a partial area of the displayed surroundings of the vehicle,
sensing of the route travelled along by the vehicle (1) by means of a route-sensing device and determination of the positions of the sensed objects on the basis of the route travelled along after said objects have left the detection range (D) of the sensor arrangement (10), and
displaying of the objects and the positions thereof relative to the vehicle (1) by means of a display device (20),
**characterized**
**in that** an area (E) of the surroundings of the vehicle for which no object information is yet available, since said area (E) has not been passed over by the detection range (D) of the sensor arrangement (10), is continuously determined, and wherein the extent of this range (E) is displayed on the display device (20).

12. Method according to Claim 11,
**characterized**
**in that** the display device (20) represents the surroundings of the vehicle in a plan view.

13. Method according to one of Claims 11 and 12,
**characterized**
**in that** the display device (20) represents, in addition to the surroundings of the vehicle, a virtual or schematic plan view (21) of the vehicle (1).

14. Method according to one of Claims 11 - 13,
**characterized**
**in that** the display device (20) represents the surroundings of the vehicle in the form of a plurality of segments (22).

15. Method according to Claim 14,
**characterized**
**in that** the display device (20) represents segments (22) in a marked fashion, wherein the marking depends in each case on whether or not at least one object has been determined in the segment (22).

16. Method according to one of Claims 14 and 15,
**characterized**
**in that** the display device (20) represents segments (22) in a marked fashion, wherein the marking depends in each case on whether or not the segment (22) has already been passed over by the detection range (D) of the sensor arrangement (10).

17. Method according to one of Claims 11 - 16,
**characterized**
**in that** the surroundings of the vehicle completely enclose the vehicle (1).

## Revendications

1. Dispositif pour afficher des objets dans l'environnement d'un véhicule comprenant un arrangement de détection (10) pour détecter des objets dans l'environnement du véhicule et déterminer leur position par rapport au véhicule (1), l'arrangement de détection (10) ne couvrant avec sa zone de détection (D) qu'une zone partielle de l'environnement du véhicule, comprenant un dispositif de détection de trajet pour détecter le trajet parcouru par le véhicule (1), et comprenant un dispositif de traitement pour, à l'aide du trajet parcouru par le véhicule (1), encore déterminer les positions des objets dans l'environnement du véhicule même lorsque ceux-ci ont quitté la zone de détection (D) de l'arrangement de détection (10), et comprenant un dispositif d'affichage (20) pour afficher les objets et leurs positions par rapport au véhicule (1),
**caractérisé en ce**
**que** le dispositif de traitement est configuré pour déterminer la zone (E) de l'environnement du véhicule pour laquelle il n'existe pas encore d'informations d'objet, car elle n'a pas été balayée par la zone de détection (D) de l'arrangement de détection (10), le dispositif d'affichage (20) étant configuré pour afficher l'étendue de cette zone (E).

2. Dispositif selon la revendication 1, **caractérisé en ce que** l'arrangement de détection (10) comprend au moins un détecteur à ultrasons (11, 12, 13, 14).

3. Dispositif selon l'une des revendications précédentes, **caractérisé en ce que** l'arrangement de détection (10) comprend au moins un détecteur (13, 14) qui est disposé sur une paroi latérale du véhicule (1) et prévu pour le mesurage des emplacements de stationnement.

4. Dispositif selon l'une des revendications précédentes, **caractérisé en ce que** l'arrangement de détection (10) comprend au moins un détecteur d'espacement (11, 12) qui est disposé sur une zone avant ou arrière du véhicule (1).

5. Dispositif selon l'une des revendications précédentes, **caractérisé en ce que** le dispositif d'affichage (20) est configuré pour représenter l'environnement du véhicule dans une vue de dessus.

6. Dispositif selon la revendication 5, **caractérisé en ce que** le dispositif d'affichage (20) est configuré pour représenter, à côté de l'environnement du véhicule, une vue de dessus (21) du véhicule (1) virtuelle ou schématique.

7. Dispositif selon l'une des revendications précédentes, **caractérisé en ce que** le dispositif d'affichage (20) est configuré pour représenter l'environnement du véhicule sous la forme de plusieurs segments (22).

8. Dispositif selon la revendication 7, **caractérisé en ce que** le dispositif d'affichage (20) est configuré pour représenter les segments (22) de façon marquée, le marquage dépendant à chaque fois de si au moins un objet a été déterminé ou non dans le segment (22).

9. Dispositif selon l'une des revendications 7 ou 8, **caractérisé en ce que** le dispositif d'affichage (20) est configuré pour représenter les segments (22) de façon marquée, le marquage dépendant à chaque fois de si le segment (22) a déjà été balayé ou non par la zone de détection (D) de l'arrangement de détection (10).

10. Dispositif selon l'une des revendications précédentes, **caractérisé en ce que** l'environnement du véhicule entoure entièrement le véhicule (1).

11. Procédé pour afficher des objets dans l'environnement d'un véhicule comprenant les étapes suivantes :
détection d'objets dans l'environnement du véhicule et détermination de leurs positions par rapport au véhicule (1) avec un arrangement de détection (10) qui,
avec sa zone de détection (D), ne couvre qu'une zone partielle de l'environnement du véhicule affiché,
détection du trajet parcouru par le véhicule (1) par le biais d'un dispositif détection de trajet et détermination des positions des objets détectés à l'aide du trajet parcouru après que ceux-ci ont quitté la zone de détection (D) de l'arrangement de détection (10), et affichage des objets et de leurs positions par rapport au véhicule (1) au moyen d'un dispositif d'affichage (20),
**caractérisé en ce**
**qu'**une zone (E) de l'environnement du véhicule est continuellement déterminée, pour laquelle il n'existe pas encore d'informations d'objet, car elle n'a pas été balayée par la zone de détection (D) de l'arrangement de détection (10), l'étendue de cette zone (E) étant affichée sur le dispositif d'affichage (20).

12. Procédé selon la revendication 11, **caractérisé en ce que** le dispositif d'affichage (20) représente l'environnement du véhicule dans une vue de dessus.

13. Procédé selon l'une des revendications 11 ou 12, **caractérisé en ce que** le dispositif d'affichage (20) représente, à côté de l'environnement du véhicule, une vue de dessus (21) du véhicule (1) virtuelle ou schématique.

14. Procédé selon l'une des revendications 11 à 13, **caractérisé en ce que** le dispositif d'affichage (20) représente l'environnement du véhicule sous la forme de plusieurs segments (22).

15. Procédé selon la revendication 14, **caractérisé en ce que** le dispositif d'affichage (20) représente les segments (22) de façon marquée, le marquage dépendant à chaque fois de si au moins un objet a été déterminé ou non dans le segment (22).

16. Procédé selon l'une des revendications 14 ou 15, **caractérisé en ce que** le dispositif d'affichage (20) représente les segments (22) de façon marquée, le marquage dépendant à chaque fois de si le segment (22) a déjà été balayé ou non par la zone de détection (D) de l'arrangement de détection (10).

17. Procédé selon l'une des revendications 11 à 16, **caractérisé en ce que** l'environnement du véhicule entoure entièrement le véhicule (1).
